# EUROPÄISCHE PATENTSCHRIFT

(11) **EP 2 109 660 B1**
(45) Veröffentlichungstag und Bekanntmachung des Hinweises auf die Patenterteilung: **07.05.2014**
(21) Anmeldenummer: 07819277.0
(22) Anmeldetag: 24.10.2007
(51) Int. Cl.: C11B 13/00

(54) **IDENTIFIKATION UND VERARBEITUNG VON SEKUNDÄRMATERIALIEN FÜR DIE KOSMETIK-, PHARMA-, UND TREIBSTOFF ERZEUGENDE INDUSTRIE SOWIE WEITERE INDUSTRIELLE ANWENDUNGSBEREICHE**
IDENTIFICATION AND PROCESSING OF SECONDARY MATERIALS FOR THE COSMETICS-, PHARMACEUTICAL-, AND FUEL-PRODUCING INDUSTRIES AND ALSO FURTHER INDUSTRIAL FIELDS OF APPLICATION
IDENTIFICATION ET TRAITEMENT DE MATÉRIAUX SECONDAIRES POUR LES INDUSTRIES COSMÉTIQUE, PHARMACEUTIQUE ET DES CARBURANTS, ET DOMAINES D'APPLICATION INDUSTRIELS SUPPLÉMENTAIRES

(30) Priorität: 26.10.2006 DE 102006050499
(43) Veröffentlichungstag der Anmeldung: 21.10.2009
(73) Patentinhaber: Tischendorf, Dieter, 36115 Hilders (DE)
(72) Erfinder: Tischendorf, Dieter, 36115 Hilders (DE)
(74) Vertreter: Müller, Eckhard
(86) Internationale Anmeldenummer: PCT/EP2007/009224
(87) Internationale Veröffentlichungsnummer: WO 2008/049598

(56) Entgegenhaltungen:
- EP-A- 1 396 531
- EP-A- 1 724 325
- WO-A-2005/010135
- WO-A-2006/111997
- DE-A1- 10 022 056
- US-A- 4 321 141
- US-A1- 2004 047 886
- PARK M -O ET AL: "Production of alternatives to fuel oil from organic waste by the alkane-producing bacterium, Vibrio furnissii M1" JOURNAL OF APPLIED MICROBIOLOGY, Bd. 98, Nr. 2, 2005, Seiten 324-331, XP002478957 ISSN: 1364-5072
- DATABASE WPI Week 199845 Derwent Publications Ltd., London, GB; AN 1998-529802 XP002478959 & RU 2 107 722 C1 (PROTEINS BIOSYNTHESIS RES INST) 27. März 1998 (1998-03-27)
- DATABASE MEDLINE US NATIONAL LIBRARY OF MEDICINE (NLM), BETHESDA, MD, US; nlm 8661674 1996, KANESHIRO ET AL: "Oleyl oleate and homologous wax esters synthesized coordenately form oleic acid by acinetobacer and coryneform strains" XP002478958

## Beschreibung

Die Erfindung betrifft ein Verfahren zum Herstellen von Thermoplasten, Kerzen oder Thermospeichermaterial sowie Ausgang- oder Zusatzstoffe für Kosmetika, Pharmaka und/oder Brenn- oder Treibstoffe auf Kohlenwasserstoffbasis.

### Hintergrund und Stand der Technik

Aufgrund der bestehenden und zunehmenden Verknappung von Rohstoffen ist es erforderlich, neue Verarbeitungswege, Anwendungsbereiche und Verwertungsmöglichkeiten für Abfallstoffe zu entwickeln, um solche erneut unter geringstmöglicher Qualitätseinbuße einer weiteren Verwendung zuführen zu können. Die in allen Bereichen des Gesellschaftslebens erkennbare Trendwende, Abfallprodukte aus Primäranwendungsbereichen als wieder verwertbaren Wertstoff zu betrachten und dem Wirtschaftskreislauf zuzuführen, basiert nicht nur auf ökologischen, sondern zunehmend auch auf ökonomischen und wirtschaftlichen Interessen.

So dienen als Rohstoffe für die Kerzenherstellung heutzutage in erster Linie Paraffin oder Bienenwachs. Für Stundenbrenner und Öllichter finden auch feste bzw. gehärtete Pflanzenfette oder Fischöl Verwendung. Zur Verbesserung der Verarbeitbarkeit für Glanzeffekt und dergleichen können Mikrowachse oder pflanzliche Hartwachse wie Candelila-Canuba oder Japanwachs beigemischt werden.

Bei diesen Stoffen handelt es sich ausschließlich um mineralische oder pflanzliche Fette und/oder Öle, die jeweils in separater Weise aus einem einzelnen Ausgangsstoff gewonnen werden.

Die mineralischen Öle und Fette, die als Rohstoff in der Kerzenherstellung verwendet werden können, fallen bei der Verarbeitung des Erdöls an, wie beispielsweise das Erdölderivat Paraffin. Aufgrund der begrenzten Erdölvorkommen und der verbesserten Verarbeitungstechniken der erdölverarbeitenden Industrie fallen bei der Aufarbeitung des Erdöls immer wieder weniger solche Erdölderivate an, die beispielsweise zur Kerzenherstellung verwendet werden können.

Organische Fette und Öle teilen sich wiederum in tierische und pflanzliche Fette und Öle auf. Pflanzliche und tierische Fette und Öle sind Mono-, Di- oder Triglyceride mittlerer oder ungesättigter Fettsäuren.

Bei der Zubereitung von Nahrungsmitteln im gewerblichen und privaten Bereich werden des Weiteren große Mengen Speiseöle und -fette pflanzlichen Ursprungs eingesetzt, insbesondere zum Braten und Frittieren. Der Anteil dieser Fette, der nicht verzehrt wird, muss als Reststoff verwertet werden. Aus dem Bereich der Gastronomie und der Lebensmittelindustrie fällt das sammelbare Potenzial an Brat-und Frittierfetten in Deutschland an.

Auch die tierischen Fette und Öle, die als Schlachtnebenprodukte anfallen, gingen früher größtenteils in die Mischfutterindustrie. Es ist notwendig, solche Materialien aus der Nahrungskette des Menschen zu entfernen.

Um dies zu erreichen, wurden diese Produkte bislang in der chemischen Industrie für Schmierstoffe, zunehmend auch zur energetischen Nutzung in Heiz- und Verstromungsanlagen, Biogasanlagen und Biodieselanlagen eingesetzt.

In der Iebensmittelverarbeitenden Industrie fallen des Weiteren organische Abfälle in Form von tierischen und pflanzlichen Abfällen sowie Essensresten an. Die Handhabung solcher Abfall- oder Reststoffe gestaltet sich aufgrund bestehender Hygiene- und Gesundheitsbestimmungen als aufwendig und besonders kostenintensiv. Bei tierischen Abfällen sind neben den hygienischen Aspekten zudem auch seuchenrechtliche Belange zu berücksichtigen. Als Konsequenz aus den sich in jüngerer Vergangenheit teils global, zumindest aber überregional ausgebreiteten Tierseuchen, die insbesondere durch tierische Abfälle übertragen wurden, unterliegen Tierabfälle speziellen strengen Auflagen.

Hierbei regelt die EU-Verordnung 1774/2002 vom 03.10.2002 die Hygienevorschriften für solche, nicht für den menschlichen Verzehr bestimmte tierische Nebenprodukte. Diese Nebenprodukte werden, je nach Gefährdungspotenzial und den daraus zu erwartenden Risiken für die menschliche Gesundheit in drei Kategorien, nachfolgend mit K1, K2 und K3 bezeichnet, eingeteilt. Im Blickwinkel steht dabei die Gefahr der Verbreitung von Krankheits- bzw. Seuchenerregern über die Futtermittelkette.

K1-Material ist gemäß EG-VO 1774/2002 unter anderem TSE-verdächtiges Tiermaterial, insbesondere von Heimtieren, Zootieren und Zirkustieren sowie von Tierkörpern, die spezifisches Risikomaterial enthalten sowie Küchen- und Speiseabfälle aus grenzüberschreitendem Verkehr. Zu TSE verdächtigem Tiermaterial zählen sämtliche Tiere mit transmissiblen spongiformen Enzephalopatien, wie zum Beispiel BSE.

Als K2-Material werden u. a. Tierexkremente, wie etwa Jauche, Magen- und Darminhalte sowie Tiere und Teile von Tieren, die auf andere Weise als durch Schlachtung verendet sind, einschließlich Tiere aus Seuchentilgungsprogrammen bezeichnet.

Als K3-Materialien werden u. a. Küchen- und Speiseabfälle, soweit sie nicht aus dem grenzüberschreitenden Verkehr stammen und für die Tierernährung oder zur Verwendung in einer Biogas- oder Kompostieranlage bestimmt sind, bezeichnet. Weiterhin werden Fische und andere Meerestiere sowie Fischabfälle und ehemalige Lebensmittel tierischen Ursprungs, die aufgrund eines solchen hygienischen oder gesundheitlichen Risikos nicht mehr für den menschlichen Verzehr, zum Beispiel wegen Verpackungsmängeln, bestimmt sind, eingestuft. Unter die Kategorie K3 fallen kurzum sämtliche tierische Abfälle, bei denen kein Verdacht und keine Anzeichen von auf Mensch oder Tier übertragbaren Krankheiten bestehen.

Die gemäß EG-VO 1774/2002 klassifizierten Materialien sind bislang nur bedingt einer Wiederverwertung zugänglich. Derzeit kommt für K1-Materialien nur die Verbrennung einschließlich der Vorbehandlung in dafür zugelassenen Anlagen sowie in Einzelfällen das Vergraben auf zugelassenen Deponien infrage. Für einzelne K2-Materialien sind neben der Verbrennung und der Deponierung auch zum Beispiel die Behandlung in Biogas- oder Kompostieranlagen sowie in bestimmten Fällen auch das Ausbringen auf landwirtschaftlichen Nutzflächen möglich. Allerdings besteht für K1- und K2-Materialien grundsätzlich die Pflicht, diese über die Gebietskörperschaften beseitigen zu lassen.

Derzeit sind einzig die K3-Materialien von der Andienungs- und Beseitigungspflicht durch die Gebietskörperschaften ausgenommen. Derartige Materialien können allenfalls für Biogas- oder Kompostieranlagen, zur Herstellung von Heimtierfuttermitteln oder in gesondert zugelassenen Fettverarbeitungsbetrieben recycelt werden.

Aufgrund des von K1- und K2-Materialien ausgehenden derzeitigen Gesundheitsgefährdungspotenzials können derartige Abfall- oder Reststoffe derzeit einer ökonomisch vernünftigen Wiederverwertung nicht zugeführt werden.

Aus der WO 2005/010135 A1 ist ferner ein Verfahren zum Herstellen von Kerzen oder Thermospeichermaterial bekannt. Dabei wird als Ausgangsstoff eine Mischung lipidhaltiger Materialien in einem ersten Verfahrensschritt gewaschen und zerkleinert, in einem zweiten Verfahrensschritt daraus die Lipide isoliert und anschließend die Lipide zu dem Rohstoff für die Kerzenherstellung oder zu dem Thermospeichermaterial fakultativ verestert und/oder raffiniert und/oder hydriert.

Zur Herstellung von Thermoplasten, Kerzen oder Thermospeichermaterial muss zur Reinigung der gewonnene Rohstoff in physikalischen und/oder chemischen Prozessen aufwändig raffiniert werden. Da in dem Ausgangsstoff sowohl mineralische, organische als auch synthetische Öle und/oder Fette vorliegen können, ist eine solche Raffination energie-, zeit- und kostenaufwändig. So enthalten mineralische Öle nach der fraktionierten (Vakuum-)Destillation von Erdöl noch Schwefel, Sauerstoff, Stickstoff sowie andere Verunreinigungen, Mehrfachbindungen und zyklische Kohlenwasserstoffe. Diese unerwünschten Bestandteile, die schon nach kurzem Gebrauch zu Alterungserscheinungen, wie Dunkelfärbung, Zunahme der Viskosität, Entstehung von Säuren und Ölschlamm, führen, werden bei der Raffination und/oder Hydrierung durch chemische und/oder physikalische Reaktion mit Wasserstoff entfernt, wodurch eine Qualitätsverbesserung erreicht wird. Durch die Reaktion von Wasserstoff mit den vorhandenen Fremdatomen entstehen zum Teil giftige Nebenprodukte, wie Schwefelwasserstoff oder Ammoniak.

Auch die Raffination der pflanzlichen Fette und Öle ist notwendig, da in den Rohölen noch verschiedene Begleitstoffe, wie beispielsweise Pigmente, Geruchs-, Geschmacks- und Bitterstoffe, enthalten sind, die meist aus Gründen der Haltbarkeit, des Aussehens und der technischen Weiterverarbeitung unerwünscht sind. Die Raffination durchläuft hierbei mehrere Stufen. Auch insoweit ist die Raffination von natürlichen Ölen oder Fetten energie-, zeit- und kostenintensiv.

### Aufgabe

Der vorliegenden Erfindung liegt daher die Aufgabe zugrunde, als K1-, K2- und/oder K3-klassifiziertes Material einer Wiederverwertung zugänglich zu machen. Aufgabe der Erfindung ist es ferner, derartige, mitunter gesundheitsgefährdende Abfall- oder Reststoffe weiteren Verwendungsmöglichkeiten zuzuführen, ohne dass von diesen Stoffen eine Gesundheitsgefährdung oder Beeinträchtigung ausgeht. Weiterhin soll die Erfindung ein Verfahren zum Herstellen von Kerzen oder Thermospeichermaterial bereitstellen, um die zeit-, energie- und kostenintensive Herstellung von Thermoplasten, Kerzen und/oder Thermospeichermaterial effizienter zu gestalten.

Die Erfindung wird durch die anhängenden Ansprüche definiert.

### Erfindung und vorteilhafte Wirkunge

Die der Erfindung zugrundeliegende Aufgabe wird mit Hilfe eines Verfahrens gemäß Anspruch 1 und einer Verwendung gemäß Anspruch 15 gelöst. Weitere vorteilhafte Ausführungen der Erfindung sind in den jeweiligen Unteransprüchen angegeben.

Das erfindungsgemäße Verfahren ist zur Erzeugung von Ausgangs- oder Zusatzstoffen für Kosmetika, Pharmaka und/oder für Treibstoffe für Brennkraftmaschinen auf Kohlenwasserstoffbasis ausgebildet. Dabei werden K1, K2 und K3 klassifizierte Materialien zum Zwecke ihrer Dekontamination oder Sterilisation einem Hydrierungsprozess unterzogen. Der Hydrierungsprozess läuft unter einer Druckeinwirkung von 0.2 bis 5 MPa (2 bis 50 bar) und unter Verwendung eines Katalysators bei einer Temperatur von 200° bis 280° für die Dauer einer Einwirkzeit t ab. Mittels eines solchen Hydrierungsprozesses können gesundheitsschädliche Kontaminanten und Erreger, wie Bakterien, Pilze, Viren, Prione und Proteine absolut zuverlässig und sicher eliminiert werden, sodass der mittels des Hydrierungsprozess erzeugbare Ausgangs- oder Zusatzstoff unbedenklich jeglicher weiteren Verwendung, etwa in der Kosmetik- und Pharmaindustrie oder gar für die Herstellung von Treibstoffen oder Brennmaterial Verwendung finden kann.

Dabei werden die in den Materialien enthaltenen proteinartige Stoffe mit und ohne Nukleinsäuren vollständig denaturiert, sodass sich das erfindungsgemäße Verfahren generell für die Weiterverarbeitung und Wiederverwertung von Fetten sämtlicher Kategorien anbietet, für die eine wirtschaftlich sinnvolle Wiederverwertung infrage kommt.

Als Abfall- oder Reststoffe im Sinne der Erfindung kommen nach der EG-Verordnung 1774/2002 als K1, K2- oder K3- klassifizierte Materialien in Betracht. Unter Materialien im Sinne der vorliegenden Erfindung fallen insbesondere Tier- und Fischfette sowie Tier- und Fischöle sämtlicher Kategorien K1 bis K3 und deren Mischungen in beliebigen Verhältnissen.

Die mittels des erfindungsgemäßen Verfahrens erzeugbaren Ausgangs- oder Zusatzstoffe eignen sich als Inhaltsstoffe für Cremes, Salben, Lotionen in diversen Applikations- und Darreichungsformen. Diese Ausgangs- und Zusatzstoffe können demgemäß wiederum für eine Vielfalt von Stoffen Verwendung finden, die ihrerseits als Grundlagen- oder Trägersubstanz für Fette, beispielweise mit unterschiedlichem Schmelzpunkten verwendet werden können. Dabei können die Schmelzpunkte der erzeugbaren Ausgangs- oder Zusatzstoffe durch geeignete Wahl der Hydrierungsparameter, wie etwa dem Druck, der Temperatur und der Einwirkzeit innerhalb eines vorgegebenen Rahmens beliebig eingestellt und im Rahmen des Hydrierungsprozesses von geeigneten Katalysatoren oder Katalysatorgemischen Gebrauch gemacht werden.

Weiterhin können die erfindungsgemäß herstellbaren Ausgangs- oder Zusatzstoffe als Wirkstoff-Trägermaterial in der Pharmaindustrie zur Herstellung diverser Pharmaka verwendet werden.

Weiterhin sind die erfindungsgemäß erzeugbaren Ausgangs- oder Zusatzstoffe als Treibstoffe für Brennkraftmaschinen Verwendung geeignet, die teils mit hohen Verdichtungen in der Brennkammer arbeiten. Diesbezüglich ist u. a. vorgesehen, dass durch Fraktionierung oder Verlängerung der Kohlenstoffkette der Ausgangs-oder Zusatzstoffe für den jeweiligen Einsatzbereich vorteilhafte Eigenschaften designt werden können.

Weiterhin ist vorgesehen, die erfindungsgemäß erzeugbaren Ausgangs- oder Zusatzstoffe für die Herstellung von Leuchtmitteln, insbesondere von Kerzen zu verwenden.

Nach einem ersten vorteilhaften Aspekt der Erfindung ist vorgesehen, dass die Einwirkzeit t, über welche der Hydrierungsprozess abläuft, mindestens 20 Minuten beträgt. Dabei ist insbesondere vorgesehen, dass während der Einwirkzeit ein Druck von zumindest 0.3 MPa (3 bar) einer Hydriereinrichtung herrscht. Die Zeitdauer der Hydrierung ist druckabhängig und muss oftmals unter Berücksichtigung der der Hydrierungseinrichtung zugeführten Abfall- oder Reststoffe geregelt werden. Hierbei gilt generell, dass mit einem höheren Druck eine geringere Einwirkzeit erzielbar ist und umgekehrt.

Während des Hydrierungsprozesses werden sämtliche Verfahrensparameter, Temperatur, Druck, Zeit sowie Art und Menge des der Hydrierungseinrichtung zugeführten Materials kontinuierlich protokolliert und überwacht, damit die Unbedenklichkeit der mittels des Hydrierungsprozesses erzeugbaren Ausgangs-oder Zusatzstoffe hinreichend gewährleistet werden kann.

Nach einer weiteren Ausführung der Erfindung ist vorgesehen, dass vor Durchführung des Hydrierungsprozesses zur Reinigung der Abfall- oder Reststoffe ein Raffinationsprozess durchgeführt wird. Mittels einer solchen Raffination können die in den organischen Abfall- oder Reststoffen vorhandenen Verunreinigungen aus dem Rohmaterial entfernt werden. Die Raffination erfolgt vornehmlich unter Temperatureinwirkung über einen Zeitraum von etwa 12 bis 60 Minuten, wobei Temperaturen von 70 °C bis 130 °C bevorzugt zu wählen sind. Dabei werden dem den Raffinationsprozess zugeführten Abfall- oder Reststoffen diverse Adsorptionsmedien, wie etwa Aktivkohle, Bleicherde, Trisyl und dergleichen Medien in unterschiedlichen Konzentrationen, typischerweise im Bereich zwischen 3 % und 12 % zugesetzt.

Bei der Raffination werden die vornehmlich aufgrund der Temperatureinwirkung in flüssiger Form vorliegenden Abfall- oder Reststoffe über Filterelemente separiert, wobei ein solcher, dem eigentlichen Raffinationsschritt nachgeschalteter Filtrierprozess ein- oder mehrfach wiederholt werden kann.

Dabei kann es insbesondere von Vorteil sein, die flüssige Fraktion einer Wäsche mit Zitronensäure, Lauge, Phosphorsäure und Wasser, ggf. mehrfach, unter Kontaktzeiten von mehreren Minuten und unterschiedlichen Rührgeschwindigkeiten, etwa 10 bis 500 Rotationen pro Minute zu unterziehen, um unerwünschte Elemente, wie Phosphate oder Schleimstoffe aus dem raffinierten Abfall- oder Reststoffen zu entfernen.

Dabei ist insbesondere die wiederholte Anwendung der Raffination und der nachgeschalteten Filtrierung von Vorteil, wodurch ein hoher Reinheitsgrad erzielt werden kann. Die jeweilige Einwirkzeit, die Temperatur, die elektrische Ladung und die Auswahl von Adsorptionsmedien und deren Konzentrationen können zwischen den sich wiederholenden Zyklen variiert werden.

Nach einer Weiterbildung der Erfindung ist vorgesehen, dass vor dem Hydrierungsprozess die ggf. zuvor raffinierten Abfall- oder Reststoffe filtriert werden. Bei diesem, etwa einem Raffinationsprozess nachgeschalteten Filtrierprozess wird das bei der Raffination separierte Flüssigprodukt etwa bei 90 °C unter Druck - oder Unterdruck in eine Filtrationspresse eingelassen, welche mittels eines Filtrationsmediums die Trennung von den zur Raffination zugefügten Adsorptionsmedien und den raffinierten Abfall- oder Reststoffen ermöglicht.

Ein etwaiger Überstand oder Filtrationskuchen kann einer kontrollierten Entsorgung, beispielsweise durch Verbrennung zugeführt werden. Das Adsorptionsmedium kann zum Teil bei mehrfachen Filtrationsdurchläufen bis zu zweimal wiederbenutzt werden, ehe dessen Effektivitätsgrenze erreicht wird.

Zur Vermeidung einer Kontamination durch belastetes Material, wie etwa K1- oder K2-Materialien wird der Filtrationsvorgang vorzugsweise unter Vakuumbedingungen, so etwa bei einem Druck von wenigen Pa (bar), vorzugsweise 100 - 200 Pa (1 bis 2 mbar) durchgeführt. Der sich bei der Filtration bildende Filtrationskuchen wird dabei in geschlossene Gefäße abgesaugt und vorzugsweise einer Entsorgung durch Verbrennung zugeführt.

Nach einer weiteren Ausführungsform der Erfindung ist vorgesehen, dass vor dem Hydrierungsprozess und nach einem etwaigen Raffinations- oder Filtrierprozess die raffinierten und/oder filtrierten Abfall- oder Reststoffe einer Desodorierung zugeführt werden. Bei der Desodorierung wird das Material bei einem Druck von etwa 100 - 300 Pa (1 bis 3 mbar) unter Temperatur- und Dampfapplikation bei etwa 200 °C bis 300 °C einer sogenannten Vakuumdestillation von 15 bis 60 Minuten Dauer unterzogen. Dabei werden freie Fettsäuren destilliert und der weiteren Verwendung zugeführt.

In der Erfindung kommen nach der EG-Verordnung 1774/2002 als K1-, K2- oder K3-klassifizierten Materialien in Betracht. Das erfindungsgemäße Verfahren stellt eine ausreichende Dekontamination und Sterilisation solcher gesundheitsgefährdend eingestuften Tierabfälle sicher. Studien haben gezeigt, dass die mit dem erfindungsgemäßen Verfahren erzielbare Risikoreduktion in einem ungünstigen Fall bei 2,2 x 10-16 besteht. Dies entspricht einem Krankheitsfall pro Weltbevölkerung alle 100.000 Jahre. Von daher können die erfindungsgemäß erzeugten Ausgangs- oder Zusatzstoffe als absolut sicher und für die Gesundheit von Mensch und Tier als unbedenklich bezeichnet werden.

Desweiteren ist eine mikrobielle Syntheseleistung vorgesehen, wobei eine de novo Synthese aus aktivierten C2 Vorläufern von Fettsäuren und Fetten durch Prokaryonten, Eukaryonten, Algen, Pilze und Hefen durchgeführt wird. Diesen Mikroorganismen werden als Substrat organische Abfälle, Altfette, Fette, Fettsäuren, Mischungen daraus und insgesamt Kohlenwasserstoffe angeboten, wobei gentechnisch veränderte oder gezüchtete Mikroorganismen unter anderem zur Variation der Überlebensbedingungen, Erhöhung und Stabilisierung der Syntheseleistung berücksichtigt werden.

Unterschiedlichen, auch durch Gentransfers oder Züchtung veränderten Mikroorganismen, können als Substrat unterschiedliche C Donatoren angeboten werden, darunter auch Fette aller Kategorien und allgemein Kohlenwasserstoffe.

Unter geeigneten Bedingungen werden Kohlenwasserstoffe unterschiedlicher und beeinflussbarer Kettenlängen de novo produziert mit einer Vielzahl von Anwendungsmöglichkeiten. Hierbei ist unter anderem von einem Dekontaminationsschritt primär auszugehen, da es zu einer de novo Synthese der Materialien durch eigene Stoffwechselschritte der Mikroorganismen über den Aufbau durch Addition von aktivierten Vorläufereinheiten von C2 bis zu einer definierten Kettenlänge kommt.

Durch Gentransfers innerhalb Spezies oder auch Speziesüberschreitung können gewünschte Eigenschaften übertragen werden, so zum Beispiel auch die Erhöhung der Syntheseleistung.

Zur Sicherstellung einer weiteren Dekontamination des Materials nach der de novo Synthese kann eine Hydrierung nach oben beschriebenem Muster angeschlossen werden, das zugleich Veränderungen der Eigenschaften nach Wunsch des produzierten Materials mitbeinhaltet und weiteren Verwendungswegen die gewünschten Eigenschaften zur Verfügung stellen kann

Nach einem weiteren vorteilhaften Aspekt ist vorgesehen, dass den ggf. filtrierten und/oder raffinierten Abfall- oder Reststoffen vor der Hydrierung organische Fette und/oder Öle und/oder Kohlenstoff- und/oder Kohlenwasserstoffverbindungen verstoffwechselnde Mikroorganismen zugeführt werden. Dabei wird insbesondere die von den Mikroorganismen, wie beispielsweise Bakterien, Pilzen, Hefen oder Algen zur Verfügung gestellte Syntheseleistung in vorteilhafter Weise ausgenutzt. Hierfür können unterschiedliche, auch durch Genmanipulation veränderte, Mikroorganismen als Substrat für unterschiedliche Kohlenstoff-Donatoren Verwendung finden.

Unter geeigneten Bedingungen können sogar Kohlenwasserstoffe und Kohlenwasserstoffverbindungen mit unterschiedlichen und durch äußere Parameter nahezu beliebig vorgegebenen Kettenlängen produziert werden. So sind insbesondere beliebige C16- und/oder C18-Kohlenstoffketten im Visier der Erfindung. Im Rahmen der Verwendung von Mikroorganismen ist primär von nur einem nachgeschalteten Dekontaminationsschritt auszugehen, da es hier zu einer de novo Synthese der Materialien über den Aufbau durch Hinzufügen von C2 kommt.

Durch den Einsatz von mineralische und/oder organische und/oder synthetische Fette und/oder Öle und/oder Kohlenstoff- und/oder Kohlenwasserstoffverbindungen verstoffwechselnden Mikroorganismen, wie beispielsweise Prokaryoten, Eukaryoten und/oder Pilzen, kann in vorteilhafter Weise eine chemische Raffination der gewonnenen Rohstoffe entfallen. Die Ausgangsstoffe werden dabei in einem Bioreaktor durch Hinzufügen der Mikroorganismen zersetzt. Als ein Produkt werden dabei Rohstoffe für Kerzen und/oder für Thermospeichermaterial, insbesondere Wachse, Wachsester und Wachsalkohole aber auch Ausgangs- und Zusatzstoffe für Kosmetika, Pharmaka und/oder Brenn- oder Treibstoffe für Heizeinrichtungen oder Brennkraftmaschinen gewonnen. Diese werden dann aus dem Bioreaktor, in welchem die Verstoffwechselung stattfindet geerntet und in einem Zieh-, Press-, Gieß-, Schäum- oder pastösen Abfüllverfahren beispielsweise zu Kerzen und/oder Thermospeichermaterial weiterverarbeitet, wobei auch Mischungen mit Paraffin und anderen Ölen und/oder Fetten möglich sind.

Die Mikroorganismen verstoffwechseln die Fette und Öle in dem Ausgangsstoff zu den Rohstoffen, insbesondere zu Wachsen, Wachsester und Wachsalkoholen. Die Fettsäuresynthesen von Prokaryoten, Eukaryoten und Pilzen erfolgt durch eine zyklische stufenweise Verlängerung durch aktivierte Vorläufer von zwei Kohlenstoffeinheiten. Sobald eine Kettenlänge von C16/C18 erreicht ist, werden die Kohlenstoffeinheiten freigesetzt. In den Mikroorganismen bzw. Bakterien werden alle Reaktionen von monofunktionalen Proteinen in einem dissoziierten oder Typ II Fettsäuresynthasesystem ausgeführt.

Als Mikroorganismen können dabei nicht pathogene Mykobakterien und/oder Vibrio Furnissii M1 und/oder Alcanivorax und/oder Fundibacter Jadensis und/oder A. Calcoacetius und/oder Acinetobacter sp., insbesondere der Typen NRRL B-14920, 14921, 14923, und/oder Coryneforme NRRL B-14922 und/oder Actinomyceten und/oder Micrococcus Cryophilus und/oder Neisseriaceae oder dergleichen verwendet werden.

Nach einer vorteilhaften Ausgestaltung der Erfindung ist es vorgesehen, dass gentechnisch modifizierte Mikroorganismen verwendet werden, um die Syntheseleistung der Mikroorganismen beziehungsweise die Ausbeute des gewonnenen Rohstoffes für Kerzen und/oder für Thermospeichermaterial zu erhöhen. Solche Mikroorganismen werden durch Gentransfer in die Lage versetzt, Kohlenwasserstoffe zu produzieren. Beispielhaft sei an dieser Stelle nur der rekombinante E.Coli DH 5 Klon genannt, der den Acinetobacter sp pha locus auf Plasmid pJKD 1425 trägt. E.Coli pJKD 1425 trägt Gene, die für die PHB Biosynthese erforderlich sind und von den Acinetobacterpromotoren kontrolliert werden. Diese Gentransfers, die zur Ausbildung und effizienzsteigernder Kohlenwasserstoff bildender Enzyme erforderlich sind, können analog auf andere Mikroorganismen, wie zum Beispiel Pilze, übertragen werden.

Die Mikroorganismen produzieren durch bakterielle Stoffwechselvorgänge aus den unterschiedlichen Substraten die für die Herstellung von Thermoplasten, Kerzen und/oder Thermospeichermaterial notwendigen verarbeitbaren Rohstoffe, wie beispielsweise Wachse, Wachsester und Wachsalkohole. Als Substrate können zum Beispiel Produkte der Petrochemie, beispielsweise Rohöl, Schweröl, Altöl und dergleichen, sowie Nahrungsmittelreste, Altspeise-, Speisefette, Naturöle und - Fette, sowohl pflanzlicher als auch tierischer Herkunft, beispielsweise Ölsaaten, sowie deren Mischungen in allen Verhältnissen eingesetzt werden.

Die so hergestellten Wachse haben, abhängig vom eingesetzten Mikroorganismus unterschiedliche Materialeigenschaften. Sie können fest bis brüchig, weich bis hart und bei Raumtemperatur oberhalb von 40 °C niedrig viskos schmelzend sein. Auch werden durch unterschiedliche Mikroorganismen Wachse unterschiedlicher Farbe, beispielsweise weiß bis opak, synthetisiert. Werden diese Wachse oder dergleichen zur Kerzenherstellung verwendet, sind beim Abbrand die durch die Mikroorganismen synthetisierten Rohstoffe praktisch frei von aschebildenden Verbindungen. Die Wachse, können in Form von intra- und/oder extrazellulären Ablagerungen als bakterielles Endprodukt in einfacher Weise geerntet werden. Bei den durch die Mikroorganismen hergestellten Rohstoffen handelt es sich um Kohlenstoffketten unterschiedlicher Kettenlängen, vornehmlich jedoch C 16 bis C 18-Komponenten. Es können auch andere Kettenlängen auftreten, je nach dem in dem Bioreaktor eingesetzten Substrat und Mikroorganismus.

Der gesamte Prozess läuft dabei ohne Umweltbelastung ab und kann so lange aufrechterhalten werden, wie die Bedingungen für das Überleben der Mikroorganismen in dem Bioreaktor gegeben sind.

Da die verwendeten Mikroorganismen apathogen sind, besteht eine Gefährdung für die Umwelt oder für andere Lebewesen nicht.

Die Stoffwechselleistung der Mikroorganismen ersetzt den aufwändigen physikalischen und/oder chemischen Raffinationsprozess der ansonsten für die Verwendung der oben beschriebenen Ausgangsmaterialien erforderlich ist. Dadurch kann ein energieintensiver chemischer und/oder physikalischer Prozess eingespart werden, der eine Reduktion der Herstellungskosten mit sich bringt und auch keine Entsorgungsproblematik entstehen lässt. Die bei der bekannten Raffination anfallende Entsorgung potentiell toxischer Abfallprodukte, wie beispielsweise Schwefelwasserstoff oder Ammoniak, entfällt.

Die Mikroorganismen werden in Bioreaktoren unter definierten Bedingungen hinsichtlich Nährmedien, Substrat, Druck, Temperatur, Salzgehalt und pH-Wert kultiviert. Für verschiedene Rohstoffe zur Herstellung von Kerzen bzw. Thermospeichermaterial können die Produktionsbedingungen hinsichtlich dieser Parameter angepasst und optimiert werden. Aus der Literatur (Berthe-Corti, Bredemeier et al., Mar. Biotechnol, 5, 579-583, 2003) ist beispielsweise der fakultativ anaerobe Alcanivorax bekannt, der aerob, submers unter Normaldruck im Salzwasser und bei einer Temperatur von ca. 300 K sowie einem ph-Wert von 7,2 unter Zusatz von Natrium und Phosphor - für das Wachstum der Mikroorganismen - und einer Sauerstoffspannung von größer 2 % unter anderem Wachs produziert. Das Wachstum der Mikroorganismen und deren Wachsproduktion erfolgen durch dieselben Medien - (Alt-)Fetten und/oder (Alt-)Ölen, N-Alkanen, Pflanzenölen - in submerser Fermentation.

Dabei werden die unterschiedlichen Substrate, je nach gewünschtem Produkt, dem Bioreaktor zugesetzt und das Endprodukt, beispielsweise Wachsester, Wachse, Wachsalkohole, Biotenside oder dergleichen, durch entsprechende Verfahrensschritte geerntet. Dabei hat es sich als vorteilhaft erwiesen, die gewonnenen Rohstoffe für Kerzen und/oder für Thermospeichermaterial durch Zentrifugation, Filtrierung, Fragmentierung, Lösungsmitteleluation oder dergleichen zu ernten.

Es ist möglich, die aus dem Bioreaktor geernteten Rohstoffe für Kerzen und/oder für Thermospeichermaterial durch Reinigung, Lösungsmittelextraktion, Zentrifugation, Destillation, Bleichung, Veresterung, Rückveresterung und/oder Hydrierung, insbesondere bis zu einer Jodzahl von unter 40,wobei auch andere Jodzahlen möglich sind, vor dem abschließenden Zieh-, Press-, Gieß-, Schäum- oder dem pastösen Abfüllverfahren weiter zu verarbeiten. Durch diese Maßnahme ist es ermöglicht, dass Kerzen oder Thermospeichermaterial in gewünschter Konsistenz und Zusammensetzung hergestellt werden können.

Die aus dem Bioreaktor geernteten Rohstoffe für Kerzen und/oder für Thermospeichermaterial können vor der Weiterverarbeitung in Zieh-, Press-, Gieß-, Schäum- oder pastösen Abfüllverfahren mit Paraffinen, Wachsen, Fetten, Ölen, Stearinen oder dergleichen geeigneten Materialien zur Kerzen- bzw. Thermospeichermaterial-Herstellung gemischt werden.

Um olfaktorischen und optischen Gesichtspunkten gerecht zu werden, werden die aus dem Bioreaktor geernteten Rohstoffe für Kerzen und/oder für Thermospeichermaterial vor der Weiterverarbeitung im Zieh-, Press-, Gieß-, Schäum- oder pastösen Abfüllverfahren mit Duftstoffen, Parfümölen, Farben oder dergleichen Zusatzstoffe versetzt.

Nach einem weiteren Gedanken der Erfindung ist es vorgesehen die Mikroorganismen in dem Bioreaktor in sauerstoffhaltigem Wasser, insbesondere in Meerwasser, zu kultivieren. In dieser Umgebung haben sich die Mikroorganismen als besonders produktiv hinsichtlich der Verstoffwechslung des Ausgangsmaterials zu den gewünschten Rohstoffen erwiesen.

Dabei hat es sich als vorteilhaft erwiesen, die Mikroorganismen in dem Bioreaktor unter einem Druck von 0,5 x 105 Pascal bis 1,5 x 105 Pascal, insbesondere 1 x 105 Pascal zu kultivieren. Unter diesen Druckbedingungen erweisen sich die Mikroorganismen als besonders produktiv hinsichtlich der Verstoffwechslung des Ausgangsmaterials zu den gewünschten Rohstoffen.

Um die Umgebungsbedingungen zur Kultivierung der Mikroorganismen weiter zu optimieren und deren Produktivität weiter zu erhöhen, werden die Mikroorganismen in dem Bioreaktor bei einer Temperatur von 283 Kelvin bis 223 Kelvin, insbesondere 293 Kelvin bis 303 Kelvin, kultiviert.

Nach einem weiteren unabhängigen Aspekt betrifft die Erfindung die Verwendung von Materialien, die nach der EG-Verordnung 1774/2002 als K1-, K2- oder K3-Materialien klassifiziert sind, zur Erzeugung von Ausgangs- oder Zusatzstoffen, die für Kosmetika, Pharmaka und/oder Trenn- oder Treibstoffe für Heizeinrichtungen oder Brennkraftmaschinen auf Kohlenwasserstoffbasis geeignet sind. Diese Materialien sollen einer Wiederverwertung, insbesondere für Applikationen im Bereich Kosmetik und Pharmazie sowie für die Erzeugung von Treib- oder Brennstoffen zugeführt werden.

Die erfindungsgemäß herzustellenden Ausgangsstoffe können in der Kosmetik unter anderem als Inhaltsstoffe für Cremes, Salben, Lotionen in allerlei Applikationsformen Verwendung finden. Dabei können die erfindungsgemäß hergestellten Fette als Grundlagen- oder Trägersubstanz mit unterschiedlichen und nahezu beliebig einstellbaren Schmelzpunkten verwendet werden.

In der Pharmaindustrie können Wirksubstanzen in das erfindungsgemäß verarbeitete Fett als Wirkstoff-Trägermaterial eingebettet und generell auch mittels Pharmakokinetik gemäß gewünschten Parametern variiert werden.

Treib- und Brennstoffe aus den erfindungsgemäß erzeugbaren Materialien können mit Einschränkungen, zum Teil aufgrund deren physikalischen Konsistenz oder Verunreinigungen insbesondere als Beimischung zu herkömmlichen Brenn- und Treibstoffen Verwendung finden.

Des Weiteren ist auch Entfernung von Verunreinigungen zur Herstellung von klaren Ölen möglich. Die beschriebene Weiterverarbeitung erlaubt zudem den Einsatz der so gewinnbaren Stoffe als Treibstoff für unterschiedliche, auch mit hohen Verdichtungen und Drücken arbeitende Verbrennungseinrichtungen. Eine Weiterverarbeitung kann durch Fraktionierung oder Verlängerung der Kohlenstoffkette bis zum gewünschten Einsatzbereich erfolgen und unterschiedliche Eigenschaften können generiert werden, die eine Verwendung als Schmierstoffe möglich macht.

Die Weiterverarbeitung mit modernen Syntheseverfahren, die sich nur auf die Kohlenstoffketten beziehen, erlauben die Verwendung dieser Stoffe, da die Kohlenstoffkette den Vorstellungen und Erfordernissen entsprechend weiterverarbeitet werden kann. Eine Verlängerung oder Verkürzung der Kette und damit wechselnde Eigenschaften sind möglich.

Beim Verarbeiten der erfindungsgemäß erzeugbaren Materialien beispielsweise für den Verwendungszweck der Produktion von Lichtern, Kerzen, Teelichtern usw. können durch höhere Press- und Abfülldrücke Probleme mit der Stabilität der Hülle oder den Abfüllgefäßen auftreten. Als Abhilfe wird vorgeschlagen, die z.B. Teelichte, bzw Teelichthüllen in natürlich stabilster Form hexagonal herzustellen, da diese Form die höchste Stabilität bei geringstem Platzbedarf und Wandung aufweist und zudem das Erscheinungsbild der Hüllen, an welches sich der Endverbraucher gewöhnt hat, am wenigsten verändert, da es der bisherigen runden Form angenähert bleibt. Darüberhinaus kann durch die erhöhte Stabilität der Form eine Materialeinsparung in der Herstellung der Hüllen oder Gefäße vorgenommen werden.

Die Anwendungsbereiche beschränken sich keinesfalls auf die angeführten Beispiele, vielmehr umfasst die Erfindung den Anwendungsbereich aller Fette, insbesondere dadurch, dass das Verarbeitungsverfahren auch die K1, K2 und K3 Fette sicher dekontaminiert.

### Ausführungsbeispiel

Nahrungsmittelreste und organische Restprodukte sowie Tierbestandteil und jegliche Art von Tierabfällen, insbesondere auch solche der K1, K2 oder K3 - Kategorie werden gesammelt, gewaschen, im Wasser aufgeschlämmt, auf eine Größe von 2 bis 3 mm zerkleinert oder/und ausgeschmolzen. Das so gewonnene Ausgangsmaterial wird einem Bioreaktor zugeführt, in dem Mikroorganismen vom Typ Alcanivorax kultiviert werden, die in der Lage sind, organisches Material unter anderem zu Wachsen, Wachsester und/oder Wachsalkoholen zu verstoffwechseln.

Die Verstoffwechslung des Ausgangsmaterials zu Wachsen, Wachsestern und/oder Wachsalkoholen findet unter einem Druck von etwa 1 x 105 Pascal und einer Temperatur von ca. 293 Kelvin bis 203 Kelvin statt. Dabei werden die Mikroorganismen in sauerstoffhaltigem Wasser, insbesondere in Meerwasser kultiviert. Die Verstoffwechslung findet, abhängig vom eingesetzten Mikroorganismus, gegebenenfalls innerhalb von 96 Stunden statt. Die so produzierten Wachse, Wachsester und/oder Wachsalkohole können, nachdem eine ausreichende Menge durch die Mikroorganismen produziert wurde, durch verschiedene Ernteverfahren isoliert werden. Hierzu zählen Zentrifugation, Filtrierung, Fragmentation und Lösungsmitteleluation.

Üblicherweise hat der Rohstoff für die gewünschte Weiterverarbeitung nicht die notwendigen Eigenschaften, wie zum Beispiel reine Konsistenz. Sodann wird eine Hydrierung unter einer Druckeinwirkung von 0.2 - 5 MPa (2 bis 50 bar) und unter Verwendung eines Katalysators bei einer Temperatur von 200° bis 280° für die Dauer einer Einwirkzeit t von zumindest 20 Minuten durchgeführt. Mittels des Hydrierungsprozesses können gesundheitsschädliche Kontaminanten und Erreger, wie Bakterien, Pilze, Viren, Prione und Proteine absolut zuverlässig und sicher eliminiert werden, sodass der dadurch gewonnene Stoff oder das Stoffgemenge unbedenklich jeglicher weiteren Verwendung, etwa in der Kosmetik- und Pharmaindustrie oder gar für die Herstellung von Treibstoffen oder Brennmaterial, wie Kerzenwachs, und Thermospeichermaterial Verwendung finden kann.

Die Hydrierung erfolgt dabei insbesondere aber nicht ausschließlich bis zu einer Jodzahl < 40, wobei die Jodzahl als Maßzahl für den Gehalt an ungesättigten Fettsäuren dient, um in einem anschließenden Gieß-, Press- oder pastösen Abfüllverfahren ein gut zu verarbeitendes und verbraucherfreundliches Produkt zu erhalten. Dabei können als Ausgangsstoff synthetische, mineralische und/oder organische Fette und/oder Öle in jedem Mischungsverhältnis vorliegen.

Nachdem der so gewonnene Rohstoff nun isoliert vorliegt, kann er zur Herstellung von Kerzen oder Thermospeichermaterial aber auch universell zu Ausgangs- oder Zusatzstoffen für Kosmetika, Pharmaka und/oder allgemein für Brenn- oder Treibstoffe weiterverarbeitet werden. Dies kann durch direkte Weiterverarbeitung in bekannten Kerzenherstellungsverfahren, wie zum Beispiel Gieß-, Press-, Zieh-, Schäum- oder pastösen Abfüllverfahren, erfolgen.

Der so gewonnene Rohstoff wird beispielsweise als flüssiges Produkt bei ca. 343 Kelvin über eine beheizte Leitung in ein beheiztes Sammelbecken gegeben; selbstverständlich sind auch andere Temperaturführungen, beispielsweise im Bereich von 317 Kelvin bis 355 Kelvin, möglich. Im Sammelbecken werden der Mischung Farben und Duftstoffe zugesetzt. Ebenso können nun andere reine Fette, Öle und Paraffine zugemischt werden, um dem Produkt die gewünschten Eigenschaften zu Verleihen.

Aus dem Sammelbecken erfolgt die Zufuhr der heißen Masse zu einem Kristallisator, der durch Applikation einer hohen Temperaturdifferenz zu einer Abkühlung der Masse führt. Als Produkt liegt nun ein grob- und/oder feinkristallines Pulver vor, welches über eine Vakuumleitung bei unterschiedlichem Unterdruck verschiedenen Pressen, Kolbenpressen, Exzenterpressen zugeführt werden kann. Dort wird die Masse durch Pressdruck und Verformung ggf. unter Temperaturapplikation zu Kerzen oder Thermospeichermaterial weiter verarbeitet.

Um ein gewünschtes Finish zu erhalten, kann dabei mit geheizten Werkzeugen gearbeitet werden, wodurch auch Überpressvorgänge vermieden werden. Diese Pressmethode hat sich als effiziente Verarbeitungsform bewährt.

Die Weiterleitung des flüssigen Rohstoffes kann auch in verschiedenen manuell oder industriell zu bedienenden Gießanlagen erfolgen, in denen es durch die sich mit der flüssigen Masse füllende Form zur Ausgestaltung der gewünschten Kerzenform durch kontrolliertes Erkalten kommt. Dabei kann die Menge des einfließenden Produktes durch einen Fühler geregelt werden. Der Abkühlprozess kann durch Applikation von Kälte oder Kälteanlagen oder Ventilatoren beschleunigt werden.

Um unerwünschte Verformungen oder Einziehungen zu vermeiden, ist es vorgesehen, einen zweiten Gießprozess anzuschließen. Dieser kann ebenfalls wieder in Füllstandoptionen automatisiert oder auch manuell durchgeführt werden. Der Rohstoff oder die Rohstoffmischung kann jedoch auch beispielsweise in einem Kristallisator soweit vorgekühlt werden, dass ein pastöser Zustand erreicht wird. In dieser pastösen Form kann der Rohstoff in ein gewünschtes formgebendes Gefäß, ggf. unter Druckapplikation, abgefüllt werden.

## Patentansprüche

1. Verfahren zur Erzeugung von Ausgangs- oder Zusatzstoffen für Kosmetika, Pharmaka und/oder Brenn- oder Treibstoffen für Heizeinrichtungen oder Brennkraftmaschinen für Kerzen, Thermospeichermaterial oder Thermoplasten auf Kohlenwasserstoffbasis, wobei nach der EG-Verordnung 1774/2002 als K1, K2 oder K3 klassifizierte Materialien zur Dekontamination oder Sterilisation einem Hydrierungsprozess unterzogen werden, welcher unter einer Druckeinwirkung von 0.2 bis 5 MPa (2 bis 50 bar) und unter Verwendung eines Katalysators bei einer Temperatur von 200°0 bis 280°C für die Dauer einer Einwirkzeit t abläuft.

2. Verfahren nach Anspruch 1, wobei die Einwirkzeit t mindestens 20 Minuten beträgt.

3. Verfahren nach einem der vorhergehenden Ansprüche, wobei zur Reinigung der K1, K2 oder K3 Materialien und vor Durchführung des Hydrierungsprozesses ein Raffinationsprozess durchgeführt wird.

4. Verfahren nach Anspruch 3, wobei nach dem Raffinationsprozess und vor dem Hydrierungsprozess die raffinierten Materialien filtriert werden.

5. Verfahren nach einem der vorhergehenden Ansprüche, wobei vor der Hydrierung und nach einem Raffinations- oder Filtrierprozess die raffinierten und/oder filtrierten Materialien desodoriert werden.

6. Verfahren nach einem der vorhergehenden Ansprüche, wobei den gegebenenfalls filtrierten und/oder raffinierten Materialien vor der Hydrierung organische Fette und/oder Öle und/oder Kohlenstoff und/oder Kohlenwasserstoffverbindungen verstoffwechselnde Mikroorganismen zugefügt werden.

7. Verfahren nach Anspruch 6, wobei gentechnisch modifizierte oder durch Züchtung gewonnene Mikroorganismen, verwendet werden.

8. Verfahren nach einem der vorhergehenden Ansprüche 6 oder 7, wobei die Zugabe von organische Fette und/oder Öle und/oder Kohlenstoff und/oder Kohlenwasserstoffverbindungen verstoffwechselnden Mikroorganismen anstelle einer Raffination der Abfall- oder Reststoffe erfolgt.

9. Verfahren nach einem der vorhergehenden Ansprüche, wobei nach der Hydrierung, die aus einem Bioreaktor geernteten Rohstoffe einem abschliessenden Zieh-, Press-, Giess-, Schäumoder pastösen Abfüllverfahren unterzogen werden.

10. Verfahren nach Anspruch 9, wobei die Rohstoffe vor der Weiterverarbeitung im Zieh-, Press-, Giess-, Schäum- oder pastösen Abfüllverfahren mit Paraffinen, Wachsen, Fetten, Ölen, Stearinen oder dergleichen geeigneten Materialen zur Thermoplasten-, Kerzen- beziehungsweise Thermospeichermaterialherstellung in allen Verhältnissen mischbar sind.

11. Verfahren nach einem der vorhergehenden Ansprüche 9 oder 10, wobei die Rohstoffe vor der Weiterverarbeitung im Zieh-, Press-, Giess-, Schäum- oder pastösen Abfüllverfahren mit Duftstoffen, Parfümölen, Farben oder dergleichen Zusatzstoffe versetzt werden.

12. Verfahren nach einem der vorhergehenden Ansprüche 6 bis 11, wobei die Mikroorganismen in dem Bioreaktor in sauerstoffhaltigem Wasser, auch fakultativ anaerob, insbesondere in Meerbeziehungsweise Salzwasser, kultiviert werden.

13. Verfahren nach einem der vorhergehenden Ansprüche, 6 bis 12, wobei die Mikroorganismen in dem Bioreaktor bei einem Druck von 0,5 x 105 Pa bis 1, 5 x 105 Pa, insbesondere 1 x 105 Pa, kultiviert werden.

14. Verfahren nach einem der vorhergehenden Ansprüche 6 bis 13, wobei die Mikroorganismen in dem Bioreaktor bei einer Temperatur von 283 K bis 323 K, insbesondere 293 K bis 303 K, kultiviert werden.

15. Verwendung von nach der EG-Verordnung 1774/2002 als K1, K2 oder K3 klassifizierten Materialien zur Erzeugung von Ausgangs- oder Zusatzstoffen für Kosmetika, Pharmaka und/oder Treib- oder Brennstoffen für Brennkraftmaschinen oder Kerzen, bzw. Thermospeichermaterial und Thermoplasten auf Kohlenwasserstoffbasis in einem Verfahren gemäß einem oder mehreren der Ansprüche 1 bis 14.

## Claims

1. Process for producing starting materials or additives for cosmetics, pharmaceuticals and/or fuels for heating installations or combustion engines for candles, thermostorage material or thermoplastics based on hydrocarbons, where materials classified according to the EC Regulation 1774/2002 as C1, C2 or C3 are subjected, for the purposes of decontamination or sterilization, to a hydrogenation process which proceeds under a pressure effect of 0.2 to 5 MPa (2 to 50 bar) and using a catalyst at a temperature of 200°C to 280°C for the duration of a contact time t.

2. Process according to Claim 1, where the contact time t is at least 20 minutes.

3. Process according to one of the preceding claims, where, for the purposes of purifying the C1, C2 or C3 materials and before carrying out the hydrogenation process, a refining process is carried out.

4. Process according to Claim 3, where the refined materials are filtered after the refining process and before the hydrogenation process.

5. Process according to one of the preceding claims, where the refined and/or filtered materials are deodorized before the hydrogenation and after a refining or filtering process.

6. Process according to one of the preceding claims, where microorganisms metabolizing organic fats and/or oils and/or carbon and/or hydrocarbon compounds are added to the optionally filtered and/or refined materials before the hydrogenation.

7. Process according to Claim 6, where genetically modified microorganisms or microorganisms obtained by cultivation are used.

8. Process according to one of the preceding Claims 6 or 7, where the addition of microorganisms metabolizing organic fats and/or oils and/or carbon and/or hydrocarbon compounds takes place instead of a refining of the waste materials or residual materials.

9. Process according to one of the preceding claims, where, after the hydrogenation, the raw materials harvested from a bioreactor are subjected to a final drawing, compression, moulding, foaming or paste-forming filling process.

10. Process according to Claim 9, where the raw materials, before the further processing in the drawing, compression, moulding, foaming or paste-forming filling process, are miscible with paraffins, waxes, fats, oils, stearins or such suitable materials for the manufacture of thermoplastics, candles or thermostorage materials in all ratios.

11. Process according to one of the preceding Claims 9 or 10, where the raw materials are admixed, prior to the further processing in the drawing, compression, moulding, foaming or paste-forming filling process, with fragrances, perfume oils, dyes or such additives.

12. Process according to one of the preceding Claims 6 to 11, where the microorganisms are cultivated in the bioreactor in oxygen-containing water, also possibly anaerobically, in particular in seawater or saltwater.

13. Process according to one of the preceding Claims 6 to 12, where the microorganisms are cultivated in the bioreactor at a pressure from 0.5 x 10⁵ Pa to 1.5 x 10⁵ Pa, in particular 1 x 10⁵ Pa.

14. Process according to one of the preceding Claims 6 to 13, where the microorganisms are cultivated in the bioreactor at a temperature from 283 K to 323 K, in particular 293 K to 303 K.

15. Use of materials classified according to the EC Regulation 1774/2002 as C1, C2 or C3 for producing starting materials or additives for cosmetics, pharmaceuticals and/or fuels for combustion engines or candles, or thermostorage material and thermoplastics based on hydrocarbons, in a process according to one or more of Claims 1 to 14.

## Revendications

1. Procédé pour la production de matières de départ ou d'additifs pour cosmétiques, produits pharmaceutiques et/ou combustibles ou carburants pour appareils de chauffage ou moteurs à combustion interne, pour bougies, matériau d'accumulation thermique ou matières thermoplastiques à base d'hydrocarbures, dans lequel on soumet des matériaux, classés en tant que K1, K2 ou K3 selon le règlement (EC) 1774/2002, pour la décontamination ou la stérilisation, à un processus d'hydrogénation qui se déroule sous l'effet d'une pression de 0,2 à 5 MPa (2 à 50 bars) et avec utilisation d'un catalyseur à une température de 200 °C à 280 °C pendant la durée d'un temps d'action t.

2. Procédé selon la revendication 1, dans lequel le temps d'action t est d'au moins 20 minutes.

3. Procédé selon l'une quelconque des revendications précédentes, dans lequel pour la purification des matériaux K1, K2 et K3 et avant l'exécution du processus d'hydrogénation on effectue un processus de raffinage.

4. Procédé selon la revendication 3, dans lequel après le processus de raffinage et avant le processus d'hydrogénation on filtre les produits raffinés.

5. Procédé selon l'une quelconque des revendications précédentes, dans lequel avant l'hydrogénation et après un processus de raffinage ou de filtration on désodorise les produits raffinés et/ou filtrés.

6. Procédé selon l'une quelconque des revendications précédentes, dans lequel avant l'hydrogénation on ajoute aux produits éventuellement filtrés et/ou raffinés des micro-organismes métabolisant des graisses et/ou huiles organiques et/ou le carbone et/ou des composés hydrocarbonés.

7. Procédé selon la revendication 6, dans lequel on utilise des micro-organismes génétiquement modifiés ou obtenus par culture.

8. Procédé selon l'une quelconque des revendications précédentes 6 ou 7, dans lequel l'addition de micro-organismes métabolisant des graisses et/ou huiles organiques et/ou le carbone et/ou des composés hydrocarbonés s'effectue au lieu d'un raffinage des déchets ou résidus.

9. Procédé selon l'une quelconque des revendications précédentes, dans lequel après l'hydrogénation on soumet les matières premières récoltées d'un bioréacteur à un processus final d'étirage, de pressage, de coulée, de moussage ou de remplissage à l'état pâteux.

10. Procédé selon la revendication 9, dans lequel avant la transformation dans le processus d'étirage, de pressage, de coulée, de moussage ou de remplissage à l'état pâteux les matières premières sont miscibles en toutes proportions à des paraffines, des cires, des graisses, des huiles, des stéarines ou des matières convenables similaires pour la production de matières thermoplastiques, de bougies ou de matériaux d'accumulation thermique.

11. Procédé selon l'une quelconque des revendications précédentes 9 ou 10, dans lequel avant la transformation dans le processus d'étirage, de pressage, de coulée, de moussage ou de remplissage à l'état pâteux on ajoute aux matières premières des parfums, des huiles essentielles, des colorants ou des additifs similaires.

12. Procédé selon l'une quelconque des revendications précédentes 6 à 11, dans lequel dans le bioréacteur on cultive les micro-organismes dans de l'eau contenant de l'oxygène, également facultativement en mode anaérobie, en particulier dans de l'eau salée ou de l'eau de mer.

13. Procédé selon l'une quelconque des revendications précédentes 6 à 12, dans lequel on cultive les micro-organismes dans le bioréacteur sous une pression de 0,5 x 10⁵ Pa à 1,5 x 10⁵ Pa, en particulier de 1 x 10⁵ Pa.

14. Procédé selon l'une quelconque des revendications précédentes 6 à 13, dans lequel on cultive les micro-organismes dans le bioréacteur à une température de 283 K à 323 K, en particulier de 293 K à 303 K.

15. Utilisation de matières classées selon le règlement (EC) 1774/2002 en tant que K1, K2 ou K3 pour la production de matières premières ou d'additifs pour cosmétiques, produits pharmaceutiques et/ou combustibles ou carburants pour moteurs à combustion interne ou bougies, ou matériau d'accumulation thermique et matières thermoplastiques à base d'hydrocarbures, dans un procédé selon une ou plusieurs des revendications 1 à 14.
